# EUROPEAN PATENT SPECIFICATION

(11) **EP 2 223 034 B1**
(45) Date of publication and mention of the grant of the patent: **18.01.2012**
(21) Application number: 08849189.9
(22) Date of filing: 03.11.2008
(51) Int. Cl.: F28D 7/10, F28F 9/04

(54) **THERMAL TRANSFER APPARATUS, SYSTEM AND METHOD**
WÄRMEÜBERTRAGUNGSVORRICHTUNG, -SYSTEM UND -VERFAHREN
APPAREIL, SYSTÈME ET PROCÉDÉ DE TRANSFERT THERMIQUE

(30) Priority: 15.11.2007 GB 0722350
(43) Date of publication of application: 01.09.2010
(73) Proprietor: Specialist Heat Exchangers Limited, Lincoln, Lincolnshire LN6 9AP (GB)
(72) Inventor: NORTHOVER, Paul, Lincoln Lincolnshire LN6 9AP (GB)
(74) Representative: Foot, Paul Matthew James
(86) International application number: PCT/GB2008/051024
(87) International publication number: WO 2009/063234

(56) References cited:
- EP-A- 0 084 701
- EP-A- 1 479 995
- FR-A- 847 322
- JP-A- 2000 079 462

## Description

The present invention relates generally to thermal transfer systems and particularly, but not exclusively, to hydraulic thermal transfer systems such as cooling systems.

The invention thus relates generally to systems where thermal energy is transferred away from a heat source and/ or by way of heat supply by means of circulation of a heat transfer fluid. In particular, the present invention relates to a thermal transfer apparatus and to a thermal transfer tube as a part thereof to effect the transfer of heat from a fluid within the tube to an environment external of the tube. In particular, the present invention relates to the transfer of heat from a working fluid in an automotive system, such as a power assisted steering (PAS) system, including a heat source, e.g. a power steering pump, or from a dedicated cooling fluid in a cooling system for cooling such an automotive system. The present invention also relates specifically to the reduction of leakage in such a system.

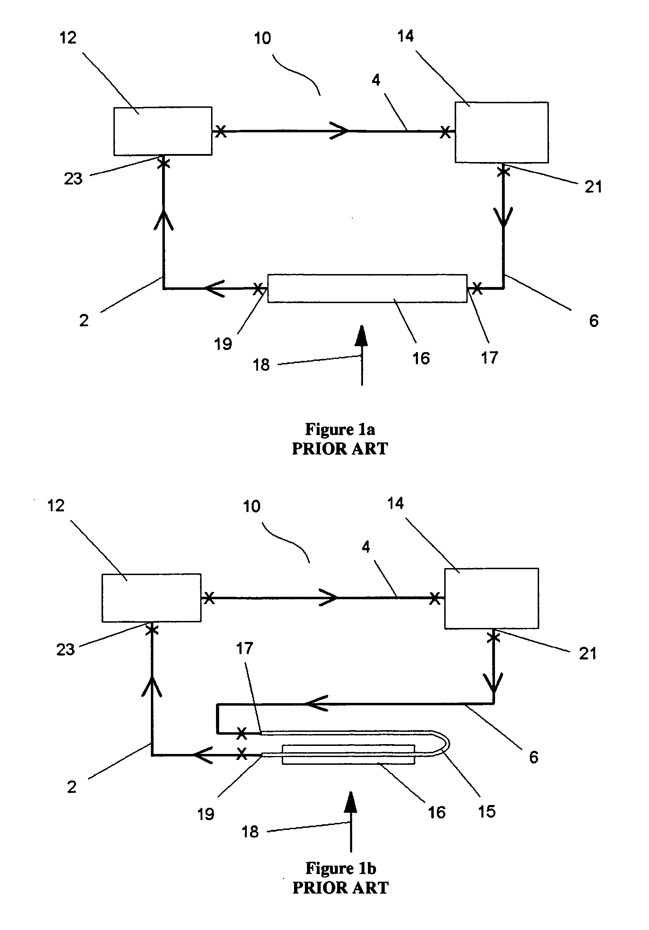

Examples of automotive systems which require a means of cooling a working fluid, e.g. a hydraulic fluid, used in the system, or require a dedicated cooling fluid, include fuel delivery systems, power assisted steering (PAS) systems, hydraulic suspension systems, pneumatic braking systems and engine/transmission oil systems. As shown in Figure 1a, such systems (10) typically comprise at least a heat source (14), e.g. a power steering pump, a reservoir (12) containing suitable fluid, and tubing (2, 4, 6) connecting the reservoir (12) and heat source (14) to form a continuous closed loop system (10). The reservoir (12) may be connected in series or parallel in the system (10) or may take the form of an integral fluid reserve or fluid volume within the heat source (14) itself.

The fluid may be a hydraulic working fluid which flows through the tubing and around the system (10). The temperature of the working fluid increases with system operating pressure and is generally higher downstream of the heat source (14). The fluid may alternatively be a dedicated cooling fluid for cooling such a heat source (14) and/or working fluid. For example, the fluid may be circulated engine coolant.

It will be understood that the term 'heat source' includes any component, device or apparatus in a system which generates heat during use and imparts heat to a working fluid and/or transfers heat to a fluid specifically provided for heat transfer purposes, for example to be cooled by a cooling fluid. Such a heat source may include an internal combustion engine, a power assisted steering (PAS) pump or steering gear, a fuel or oil pump or part of a hydraulic suspension or pneumatic braking system.

In all cases, the fluid leaves the heat source at an elevated temperature, and it is desirable to cool it in a cooling line. In the case of a working fluid, it is generally desirable to ensure the temperature of the fluid in the system is controlled and kept below a desired level. In the case of a fluid specifically provided for heat transfer purposes, such as a cooling fluid, the fluid has as a specific function the movement of or removal of heat from the system. In all such cases, the fluid is circulated and, by means of this circulation, heat may be transferred. Therefore, all such fluids are referred to collectively herein as heat transfer fluids whether that is their primary purpose or not.

Therefore, it is typical to arrange heat transfer means, generally downstream of the heat source, to transfer heat from the fluid thereby ensuring the temperature of the fluid is kept below the desired level and for example below a desired maximum. The extracted thermal energy may be treated as surplus. However it may be put to use, for example as a space heater. For example in vehicle systems it is known to use heat removed from circulated engine coolant to heat the passenger compartment of a vehicle. Typically, this can be effected conveniently by locating heat transfer means downstream of the heat source and within the passenger compartment. A suitable air impeller may then be used to drive air over or through the heat transfer means and (now heated) into the passenger compartment.

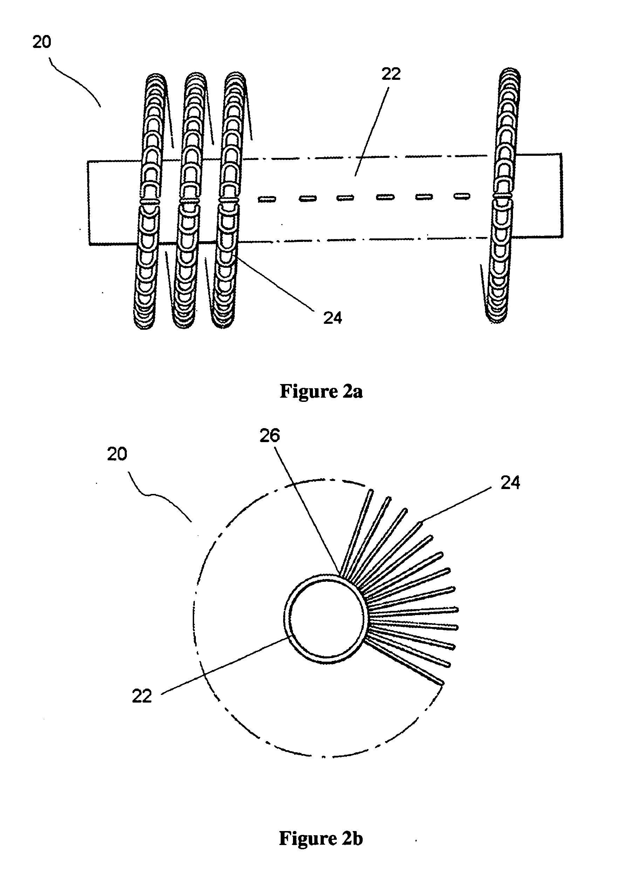

Suitable heat transfer means include 'tube and fin' heat exchangers. As shown in Figures 2a and 2b, this type of heat exchanger (20) typically comprises a hollow metal tube (22) having a metal wire (24) secured to its exterior surface. The wire (24) is generally in the form of a continuous helix defining individual loops (24) which is itself helically wound around the exterior of the tube (22) to form a heat exchanger element. The individual loops (24) of the heat exchanger element are secured to the exterior of the tube (22) by adhering, soldering, brazing or using a binding wire (not shown), with or without adhesive, to secure the base (26) of each loop (24) to the tube (22).

Generally, such a heat exchanger is connected between the heat source and the reservoir, for example by provision of a fluid supply conduit connecting an outlet of the heat source to an inlet of the heat exchanger tube, and of a fluid delivery conduit connecting an outlet of the heat exchanger tube to an inlet of the reservoir. Such conduits may be flexible rubber hoses or similar.

Heat transfer takes place across the tube wall and from the heat exchanger element disposed on the heat exchanger tube. Heat is thereby transferred from the fluid flowing through the heat exchanger tube to, typically, air flowing over the exterior of the heat exchanger tube and the heat exchanger element. The heat exchanger may be arranged within the engine compartment of the vehicle so that air flows over the heat exchanger in a substantially perpendicular direction relative to the tube when the vehicle is moving (shown by arrow 18 in Figure 1a). As will be understood, vehicle speed affects the speed of air flowing over the heat exchanger, thereby affecting the rate of heat transfer. Alternatively, if it is desired to use the excess heat to heat a vehicle passenger compartment, the heat exchanger may be located in, or otherwise fluidly connected with, the passenger compartment so that heat is transferred from the fluid flowing through the heat exchanger tube to air flowing over the exterior of the heat exchanger tube and the heat exchanger element and into the passenger compartment. As will be understood, the heat exchanger element arranged on the heat exchanger tube forming the heat exchanger greatly affects the rate of heat transfer between the fluid and air flow, compared to the rate at which heat transfer would take place if the heat exchanger element was not present.

It is known for at least one heat exchanger element (16) to be arranged (as shown in Figure 1 b) on an arm of a 'U'-shaped heat exchanger tube (15), one end of an arm comprising the tube fluid inlet (17) and the other comprising the tube fluid outlet (19). Alternatively, where a high heat transfer rate is required, e.g. high performance applications or those having a high system operating pressure, a heat exchanger element may be arranged on each arm of the 'U'-shaped tube (15). It is also known to force additional air over the heat exchanger element (16) or increase the speed of airflow by a providing a fan, for example.

A disadvantage associated with connecting at least one heat exchanger in a cooling system, as described above, is related to the number of joints in the system and/ or the proximity of those joints to the heat exchanger tube. For various practical reasons, in particular associated with the manufacture of the finned structures onto the tube, a heat exchanger tube is typically fabricated as a separate component, with an inlet and an outlet for the connection of a fluid supply and a fluid delivery conduit. As shown in Figures 1 a and 1 b, suitable tubing (2, 4, 6) is used to fluidly connect in series the components of a typical cooling system, i.e. reservoir (12) to heat source (14) to heat exchanger (16) to reservoir (12), and a joint exists at each connection point. In particular, a fluid supply conduit (6) connects a heat source outlet (21) with a heat exchanger tube inlet (17) and a fluid delivery conduit (2) connects a heat exchanger tube outlet (19) with a reservoir inlet (23). Such connecting tubing (2, 4, 6) may be in the form of flexible, e.g. rubber, hoses which fluidly connect the system components in series via simple male/female connections where the ends of the rubber hoses slide over suitably adapted inlets and outlets of the corresponding components, as described above, for example.

Therefore, in such a system (10) comprising the abovementioned minimum number of components (12, 14, 16), there are typically six joints (X) in the system (10). Notably, there are joints at the heat exchanger tube inlet and the heat exchanger tube outlet in close proximity to the heat exchanger tube. Of course, where more components are present, more joints will be required.

The fluid supply conduit (2) heat exchanger (16) fluid delivery conduit (6) sub-assembly of the cooling system (10) therefore forms a three-part sub-assembly. Often the fluid supply conduit (2), heat exchanger tube (15) and fluid delivery conduit (6) are different materials and connected together by connection means, as described above; a joint being present at each point of connection. An undesired effect caused by the joints in such a system is leakage of fluid, e.g. oil or air, from the system. Leakage can be caused by poor fitting joints, pressure and thermal effects on the joints themselves and relative movement between the component parts. The results of such leakage can be seriously detrimental to the system in a number of ways, for example by adversely affecting the efficiency of the heat exchanger and, due to pressure losses, the performance of the cooling system or other thermal transfer system itself. Leakage at joints between supply and delivery conduits connecting at the heat exchanger tube inlet and the heat exchanger tube outlet in close proximity to the heat exchanger tube might be particularly undesirable. It is generally desirable to reduce the number of joints in the system and/ or to reduce the number of joints that are necessarily in close proximity to the heat exchanger tube. Document FR847322 discloses a thermal transfer means for heating vehicles according to the preamble of claim 1. According to a first aspect of the present invention, a thermal transfer means according to claim 1 is

The fluid supply conduit, heat exchanger tube and fluid delivery conduit are integrally formed from a common tube formation. This is to be understood to mean a tube formed as an integral, monolithic whole via any suitable tube forming process and then suitably shaped so that portions of the tube serve as the fluid supply conduit, heat exchanger tube and fluid delivery conduit.

Thus, joints in close proximity to the heat exchanger tube between the heat exchanger tube and the fluid supply conduit and fluid delivery conduit are eliminated. The integral tube comprises not just a heat exchanger tube but also a lead in length of tube comprising a fluid supply conduit tube and a tail length of tube comprising a fluid delivery conduit tube, both of significant length. This can be contrasted with those prior art arrangements where the primary tube structure essentially comprises a heat exchanger tube and joints are necessary closely adjacent the inlet and outlet of the heat exchanger tube to connect fluid supply and fluid delivery hoses at an inlet and an outlet of a heat exchanger tube.

Such a single common tube formation may in an exemplary embodiment have plural bores but preferably defines a single bore. Preferably, the common tube formation is formed by extrusion and suitably shaped so that no mechanical joints, as described above, are present in the resultant tube formation.

The heat exchanger element disposed on the heat exchanger tube is formed from wire, in the form of a continuous helix defining individual loops, which is itself helically wound around the exterior of the heat exchanger tube. As described above, this form of heat exchanger is known as a 'tube and fin' heat exchanger. The integral thermal transfer means, at least in the heat exchanger tube portion thereof, comprises a plurality of grooves along its length. The grooves are disposed on the exterior of the heat exchanger tube and correspond with the individual loops of wire helically wound around the tube forming the heat exchanger. The external grooves advantageously provide for improved thermal contact between the exterior surface of the tube and the base of each individual loop of the heat exchanger element, thereby improving the heat transfer efficiency of the heat exchanger. The grooves also provide a locating means, particularly when binder wire is used, to securely attach the individual loops of the helically wound wire to the exterior of the heat exchanger tube.

In the preferred case, where individual loops of the heat exchanger element are secured for example by mechanical means such as a binding wire and suitable adhesive to secure the base of each individual loop to such grooves the heat exchanger tube there can be significant fabrication advantages. The heat exchanger loops can be attached as part of the tube fabrication process, as the tube is formed to an appropriate shape. This makes formation of an integral tube of complex shape of which the heat exchanger portion forms only a part and which does not require so many joints, at least in proximity to the heat exchanger portion, a more practical proposition. It can also avoid the need for subsequent bore fabrication treatments after the integral tube with heat exchanger element has been formed. In prior art methods, the structure may be consolidated by the introduction of tooling or a pressurisation fluid internally to the bore and/ or may require the addition of structures to control the bore profile after attachment of the heat exchanger element. The preferred method above can avoid the need for this, which improves control of internal bore conditions after fabrication as there are no internal components or contaminants to become detached.

The individual loops of the heat exchanger element may be in thermal conductive contact with the exterior of the heat exchanger tube and secured thereon by soldering or brazing, for example, or by mechanical means such as using a binding wire and suitable adhesive to secure the base of each individual loop to the heat exchanger tube.

The heat exchanger tube may further comprise projections disposed on the interior surface of the tube corresponding to the grooves on the exterior of the heat exchanger tube.

Preferably, the heat exchanger tube on which the heat exchanger element is arranged forms a minor portion of the length of the integral thermal transfer means/ line. By 'minor portion' it will be understood that the heat exchanger tube forms 50% or less of the length of the integral thermal transfer means/ line.

According to a further aspect of the present invention, a thermal transfer system according to claim 6 is provided

For example, a cooling system is provided comprising an integral cooling line in the form of a thermal transfer means as described above and at least a heat source and a fluid reservoir fluidly connected in a continuous circuit for the recirculation of a cooling fluid in the system.

In a particular preferred embodiment, the cooling system comprises a cooling system for a vehicle system such as an automotive vehicle system which requires a means of cooling a fluid. Such a vehicle system comprises the heat source of the cooling system above described. For example, such a vehicle system comprises a system which requires a means of cooling a working fluid such as a hydraulic fluid or lubricating fluid used in the system, and which becomes heated during operation of the vehicle system. Alternatively, the vehicle system comprises a system through which a dedicated cooling fluid is circulated to reduce the temperature of the system. The working fluid or dedicated cooling fluid as the case may be comprises the cooling fluid as above described.

For example, additionally or alternatively, a space heater is provided comprising an integral thermal transfer means as described above and at least a heat source and a fluid reservoir fluidly connected in continuous circuit for the recirculation of a heat transfer fluid in the system, wherein at least the heat exchanger portion of the integral thermal transfer means is located in or otherwise fluidly connected with the space to be heated.

In an exemplary embodiment, the space heater is preferably a space heater incorporated into a vehicle for heating a space within the vehicle, such as a passenger compartment within the vehicle, in that at least the heat exchanger of the space heater is located in or otherwise fluidly connected to the space within the vehicle such as the passenger compartment.

In an exemplary embodiment the heat source is preferably a vehicle system, and in particular preferably a vehicle system from which it is desirable to extract excess or surplus heat. In a particularly convenient embodiment, the heat source is a vehicle engine, especially an internal combustion engine, and the heat transfer fluid circulating within the system comprises engine coolant.

Vehicle space heaters which make use of engine coolant or other automotive systems as a heat source will be familiar. The engine coolant or other fluid is heated by circulation within or around the relevant automotive system within an engine compartment, and is transferred via a suitable arrangement of conduits through a heat exchanger located in a vehicle passenger compartment. Such an engine cooling/vehicle heating system may have multiple circuits operating for the circulation of coolant, and may require complex conduit and joint structures. In particular, it is usual for any heat exchanger located within the volume of the vehicle cab to require complex connections within the cab itself. As described above, multiple connections provide potential leak paths. This is particularly undesirable within the passenger compartment itself, as it is particularly undesirable that fluid should leak into the passenger compartment.

Advantageously, in accordance with the invention, the integral thermal transfer means allows the number of connections in the system and/or the number of connections in close proximity to the heat exchanger to be reduced. In a preferred embodiment of the space heater system, only an integral thermal transfer means in accordance with the present invention is located within the space to be heated, with an inlet to the fluid supply conduit and an outlet to the fluid delivery conduit located outside the space to be heated, so that all fluid connections are outside the space to be heated. This ensures that any leak takes place outside the space to be heated, and for example in the engine compartment and not in the passenger compartment of a vehicle.

In an exemplary embodiment, the heat source may include a fluid reservoir which may be a container for retaining a volume of heat transfer fluid separate to the heat source and may be fluidly connected in series with the heat source. Alternatively, the container may be fluidly connected in parallel with the heat source via an auxiliary circuit, for example, In either embodiment, at least a further conduit may be required to connect the reservoir with the heat source. The further conduit may be a flexible hose and may be a different material to the integral thermal transfer means. Further alternatively, the fluid reservoir may take the form of a fluid reserve or fluid volume within the heat source itself, in which case a further conduit will not be required.

The fluid supply conduit and fluid delivery conduit are integrally formed with the heat exchanger tube thereby forming a single, one part integral thermal transfer means which can be incorporated as a fluid transfer line in a fluid circuit. The fluid supply conduit and the fluid delivery conduit thereby comprise significant additional tube elements integral with the heat exchanger tube.

Different connectivity options are offered by the provision of such a substantial tubular lead/ tail at either side of the heat exchanger tube itself. For example, advantageously, in accordance with the present invention, a fluid inlet of the integral thermal transfer means may connect directly to an outlet of the heat source and a fluid outlet of the integral thermal transfer means may connect directly to an inlet of the heat source and for example to an inlet of a fluid reservoir therein. The number of joints in a complete system may be reduced. For example the joints between the fluid supply outlet and heat exchanger tube inlet and the heat exchanger tube outlet and the fluid reservoir inlet in a three-part (supply conduit/heat exchanger/delivery conduit) sub-assembly of conventional cooling systems, as described above, are eliminated. Therefore, the number of potential leat paths in the cooling system, at least local to the heat exchanger tube, is significantly reduced.

An integral thermal transfer means according to the present invention also provides for lower manufacturing and assembly time and costs.

In an exemplary embodiment, the fluid supply conduit, heat exchanger tube and fluid delivery conduit, forming the common single tube formation of the integral thermal transfer means, are of the same material. Preferably, the common tube formation of the integral thermal transfer means is a substantially rigid material. Suitably, the common tube formation of the integral thermal transfer means is formed of a metal material and preferably is aluminium or a suitable aluminium alloy, steel and especially carbon steel, stainless steel etc, copper and copper alloys. Aluminium and aluminium alloys are particularly preferred. Advantageously, this provides for a lightweight, rigid and inexpensive one-part integral thermal transfer means. In addition, an aluminium or aluminium alloy thermal transfer means provides for efficient transfer of heat from the fluid flowing through the fluid supply and fluid delivery conduits as well as from die fluid flowing through the heat exchanger tube of the heat exchanger.

Preferably, the heat exchanger tube forms 30% or less of the length of the integral common tube formation making up the thermal transfer means/ line.

Preferably each of the fluid supply conduit and fluid delivery conduit makes up a greater proportion of the total length of the integral common tube formation than does the heat exchanger tube. Preferably, the heat exchanger tube portion of the integral thermal transfer means/ line is substantially shorter than both of the fluid supply conduit and fluid delivery conduit portions of the integral common tube formation.

Preferably, the heat exchanger tube is substantially straight and uncoiled allowing for less complex manufacturing of the heat exchanger portion of the integral common tube formation. Where the integral common tube formation comprises a thermal transfer means/ line that forms part of an automotive cooling system, the heat exchanger can also be arranged within an engine compartment so that air flowing through the engine compartment flows over the heat exchanger in a substantially perpendicular direction. This provides for maximum heat transfer efficiency of the heat exchanger.

The terms 'minor portion' and 'uncoiled' have been used to differentiate the present invention from a conventional 'U'-shaped heat exchanger having parallel arms and at least one heat exchanger element disposed on one of the arms, as described above. These features of the present invention expose more of die integral common tube formation of the thermal transfer means to the air flowing through the engine compartment. A major portion of the integral common tube formation, i.e. the fluid supply and fluid delivery conduits, is therefore used for heat transfer purposes in addition to the heat exchanger disposed on the minor portion of the integral common tube formation, i.e. the heat exchanger tube.

Suitably, the integral thermal transfer means may comprise more than one heat exchanger. More than one heat exchanger may be suitable for applications having a high system operating pressure or high performance applications.

As described above, the integral thermal transfer means may connect between the heat source and a separate reservoir where the fluid inlet of the integral thermal transfer means connects to an outlet of the heat source and the fluid outlet of the integral thermal transfer means connects to an inlet, of the reservoir. Where the reservoir takes the form of a fluid reserve or volume within the heat source itself, the fluid inlet and fluid outlet of the integral thermal transfer means may connect directly to a heat source outlet and heat source inlet respectively.

A heat source may include any heat generating device or apparatus which is arranged to transfer heat to a suitable heat transfer fluid, for example in that it requires cooling, by a suitable cooling fluid and/or which is supplied by, and heats during use, a suitable working fluid. The temperature of the fluid is typically increased by the heat source whilst flowing there through. Such a heat source may include an internal combustion engine (whether transferring heat into lubricant fluid or dedicated coolant fluid circulating into its cooling system), a power assisted steering (PAS) pump or steering gear, a fuel or oil pump or part of a hydraulic suspension or pneumatic braking system.

Of course, the integral thermal transfer means is suitable for other applications, including pneumatic systems, which require a dedicated cooling system and/ or which require the transfer of heat.

Suitably, the integral thermal transfer means may comprise attachment means to attach the thermal transfer means to a vehicle body or a component thereof. Suitable attachment means may include suitably adapted clips or brackets, for example.

Examples of cooling systems in which the integral cooling line of the present invention may be used include automotive systems. These might include automotive systems which require a means of cooling a working fluid, such as a hydraulic fluid or lubricating fluid used in the system, or which are provided with a dedicated circulating coolant. Such systems will generally be familiar. In typical prior art systems, a heat exchanger unit comprises essentially a heat exchanger tube which is connected by separate cooling fluid supply and cooling fluid delivery conduits, for example in the form of flexible rubber hoses, via joints to a tube inlet and a tube outlet in close proximity to the tube itself. By contrast, in accordance with the present invention, significant lengths of tube integrally comprise, at least in part, such a supply conduit and such a delivery conduit in a single, monolithic whole, integral cooling line fabricated from a single material. If such an integral cooling line is incorporated directly into a conventional cooling system, it is possible thereby to reduce the number of connections and/or to reduce the number of connections in close proximity to the heat exchanger tube itself.

The cooling line in accordance with this embodiment of the present invention may be arranged to discord heat extracted from the cooling fluid, for example to ambient, or to transfer the heat to another locution where it can be put to use. This can be achieved by suitable placement of the components of the integral cooling line, and in particular of the heat exchanger. For example, a cooling line may additionally serve as a heat source for a space heater in accordance with the second principal embodiment set out below.

A space heater in accordance with an exemplary embodiment of the present invention is in particular a vehicular space heater, for example for heating the passenger compartment of a vehicle, and for example an automotive vehicle. Advantageously, the space heater makes use of heat extracted from, and in particular surplus to, an automotive system such as a system discussed herein above.

A space heater in accordance with the exemplary embodiment of the present invention is adapted for connection into a circuit comprising a heat source as above defined, in such manner that the integral fluid supply conduit, heat exchanger tube and fluid delivery conduit reduce the number of connections required, at least proximal to the heat exchanger tube. For example, the number of connections required within the space to be heated might be reduced.

Conveniently, the space heater comprises in an exemplary embodiment a housing substantially enclosing that part of the heat transfer means, such as the heat exchanger, which is located within die space to be heated. Such a housing includes apertures to allow air heated by the thermal transfer means to circulated within the space to be heated.

Preferably, an impeller is provided to force air across or through at least the heat exchanger and thereby to encourage the circulation of heated air through the space to be heated.

Preferably, control means are provided to control the rate of air flow through such an impeller and/or baffle means are provided to restrict airflow over or through the heat exchanger so as to control die rate at which heated air is circulated into the heated space. For example, impeller control means and/or baffle means are controlled by a suitable thermostat to maintain a desired temperature in the heated space.

A vehicle according to claim 9 incorporating a system as described above comprising an integral thermal transfer means for example as an integral cooling line and/ or space heater is also provided according to the present invention.

A further aspect of the present invention is a method of installing a thermal transfer means into a heat transfer system according to claim 10, the method comprising the steps of: - connecting the fluid inlet of the fluid supply conduit to a fluid outlet of a heat source; and
- connecting the fluid outlet of the fluid delivery conduit to a fluid inlet of a heat source and for example to a fluid inlet of a reservoir thereof.

The method in an exemplary embodiment connects an integral thermal transfer means as above described into a fluidly continuous heat transfer circuit. It enables the provision of a substantial tubular lead/ tail at either side of the heat exchanger tube itself. The number of joints in a complete system and/ or the need for joints proximal to the heat exchanger tube may be reduced, with consequent reduction in leak paths. The method may comprise connecting a fluid inlet of the integral thermal transfer means directly to an outlet of die heat source and/ or a fluid outlet of the integral thermal transfer means directly to an inlet of the heat source and, for example, to an inlet of a fluid reservoir thereon. The number of joints between the fluid supply outlet and heal exchanger tube inlet and the heat exchanger rube outlet and the fluid reservoir inlet in a three-part (supply conduit/heat exchanger/delivery conduit) sub-assembly of conventional cooling systems may be reduced.

In one example embodiment, the thermal transfer means is an integral cooling line, and the method comprises fitment of the same into a cooling system, and for example a system for cooling a vehicle operational system.

In another example embodiment, the thermal transfer means is a space heater, and the method comprises fitment of the same in such manner that at least the heat exchanger is located in or otherwise fluidly connected with the space to be heated, for example being a passenger compartment of a vehicle, so that heat is transferred from the fluid flowing through the heat exchanger tube to air flowing over the exterior of the heat exchanger tube and the heat exchanger element and into the space to be heated.

The present invention will now be described, by way of example only, with reference to the accompanying figures, in which:
- Figure 1a shows a schematic of a typical automotive cooling system;
- Figure 1 b shows a schematic of the cooling system of Figure 1 b including a 'U'-shaped heat exchanger;
- Figure 2a shows a known 'tube and fin' heat exchanger;
- Figure 2b shows an end view of the heat exchanger of Figure 2a;
- Figure 3 shows one embodiment of the heat transfer means of the invention incorporated as an integral cooling line, for example for an automotive system;
- Figure 4 shows a cross section through the heat exchanger portion of the heat transfer means comprising the integral cooling line of figure 3; and
- Figure 5 shows one embodiment of the heat transfer means of the invention incorporated as a vehicle cab heater.

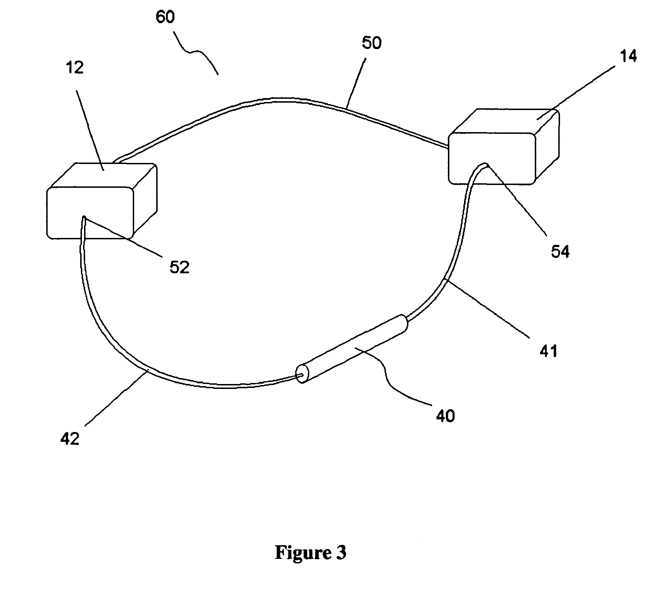

With reference to Figure 3, an integral cooling line (40, 41, 42) comprises, fluidly in series, a fluid supply conduit portion (41) having a fluid inlet (54) adapted for connection to a fluid outlet of a heat source (14), a heat exchanger portion (40) comprising a heat exchanger tube having at least one heat exchanger element disposed thereon, and a fluid delivery conduit portion (42) having a fluid outlet (52) adapted for connection to an inlet of a reservoir (12) to return fluid back to the heat source (14). The fluid supply conduit portion (41), heat exchanger tube and fluid delivery conduit portion (42) are therefore integrally formed to form a common tube formation (40, 41, 42) fabricated from a single material, for example as a single extrusion.

The integral cooling line (40, 41, 42) may connect between the heat source (14) and a separate reservoir (12) where the fluid inlet (54) of the integral cooling line (40, 41, 42) connects to an outlet of the heat source (14) and the fluid outlet (52) of the integral cooling line (40, 41, 42) connects to an inlet of the reservoir (12). Where the reservoir (12) takes the form of a fluid reserve or volume within the heat source (14) itself, the fluid inlet (54) and fluid outlet (52) of the integral cooling line (40, 41, 42) may connect directly to a heat source outlet and heat source inlet respectively.

The heat exchanger tube of the heat exchanger portion (40) is integrally formed with the fluid supply conduit portion (41) and fluid delivery conduit portion (42) to form the integral cooling line (40, 41, 42). This provides a one-part integral cooling line (40, 41, 42), thereby eliminating the joints between rubber tubing and a heat exchanger as present in a three-part sub-assembly of conventional cooling systems, as described above. Therefore, the number of potential leak paths in the cooling system (60) is significantly reduced.

A one-part integral cooling line (40, 41, 42) also reduces manufacturing time and cost.

The integral cooling line (40, 41, 42) is aluminium providing a lightweight construction and efficient heat transfer from the fluid flowing through the cooling line (40, 41, 42) by the heat exchanger portion (40) and fluid supply (41) and fluid delivery (42) conduit portions integrally formed therewith.

The fluid supply conduit portion (41), heat exchanger tube and fluid delivery conduit portion (42) act as means for transferring heat from the suitable cooling fluid or working fluid, flowing around the system (60), to air flowing over the heat exchanger (40) and the fluid supply and fluid delivery conduit portions (41, 42). The integral cooling line (40, 41, 42) may be located downstream of the heat source (14) thereby ensuring the temperature of the fluid returning to the heat source (14) is lower than the fluid leaving the heat source (14) and is kept below a maximum allowable level.

The fluid inlet and fluid outlet (52, 54) are suitably adapted to connect the integral cooling line (40, 42) in to a cooling system. The inlet and outlet (52, 54) connect directly to the heat source (14) and reservoir (12). The number of joints in the cooling system (60) and the amount of leakage occurring from the system (60) is thereby reduced. Such a connection may be mechanical.

The fluid supply conduit portion (41) and fluid delivery conduit portion (42) are both substantially longer than the heat exchanger tube of the heat exchanger portion (40). In other words, the heat exchanger element is disposed along a substantially minor portion of the length of the cooling line (40, 41, 42). A major portion of the length of the cooling line (41, 42) is therefore exposed to the air flowing through the engine compartment and can therefore be used, in addition to the heat exchanger portion (40), for heat transfer purposes.

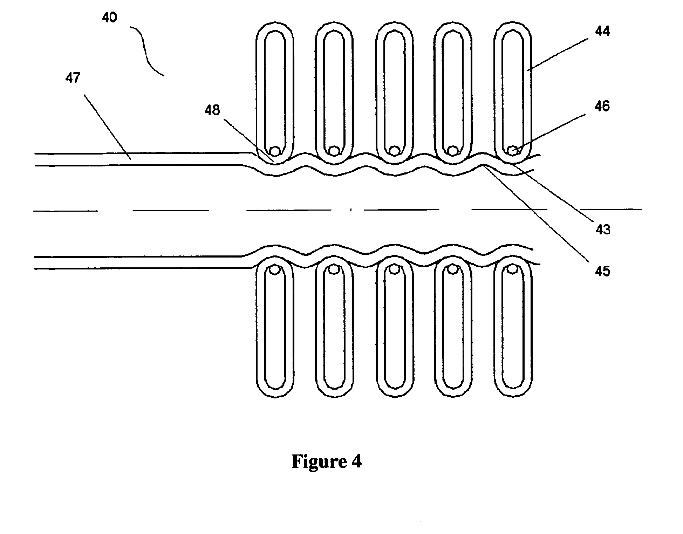

With reference to Figure 4, the cooling line and at least the heat exchanger tube (47) comprises a plurality of grooves (43). The grooves (43) are disposed on the exterior of the tube (47). The grooves (43) correspond with the individual loops of wire (44) helically wound around the tube (47) forming the heat exchanger element of the heat exchanger (40). The grooves (43) advantageously provide for improved thermal contact between the exterior surface of the tube (47) and the base (48) of each of the individual loops (44), thereby improving the heat transfer efficiency of the heat exchanger portion (40). The grooves (43) also provide a locating means, particularly when binder wire (46) is used, to securely attach the individual loops (44) of the helically wound wire to the exterior of the heat exchanger tube (47).

The heat exchanger tube (47) also comprises a plurality of projections (45) disposed on the interior surface of the tube (47). The projections (45) conveniently correspond to the grooves (43) on the exterior surface of the tube (47).

As described above, an integral cooling line (40, 41, 42) according to the present invention provides a number of significant advantages over known cooling systems, including the reduction of the number of joints in such a system (60) and/ or the reduction of the number of joints closely proximal to the heat exchanger portion (40).

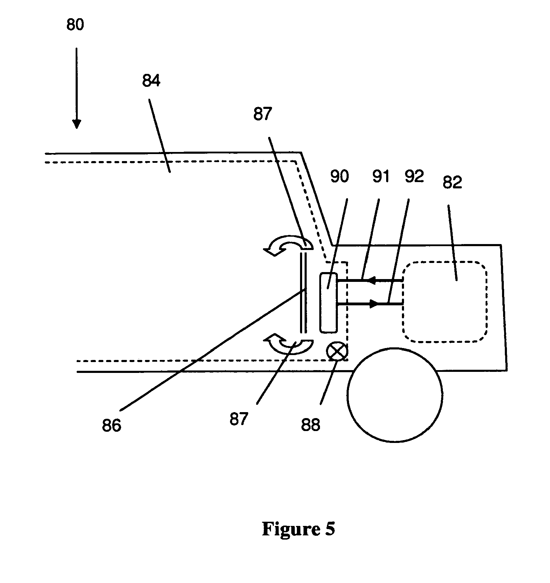

Figure 5 illustrates a possible use of a thermal transfer means in accordance with an embodiment of the invention as a heater for a vehicle cab. A vehicle (80) has an engine compartment (82) and a passenger compartment (84). The engine compartment (82) includes an internal combustion engine (not shown) which is cooled by the circulation of engine coolant, for example primarily comprising water with suitable additives, in a conventional manner.

In accordance with the embodiment modified to the principles of the invention, an integral heat exchanger line (90, 91, 92) is provided to transfer heat from the engine compartment (82) to the passenger compartment (84). This takes the form of a fluid supply conduit (91), a heat exchanger (90), and a fluid delivery conduit (92) fabricated as an integral whole in accordance with the general principles of the invention, for example in like manner to the cooling line of the above embodiment, and for example in accordance with the design illustrated in Figure 4.

The integral heat exchanger unit (90, 91, 92) circulates a heat transfer fluid which in the embodiment is coolant from the engine. The fluid supply conduit (91) connects to a source of engine coolant, and the fluid delivery conduit (92) completes the circuit by delivering the engine coolant back to the engine compartment. At least the heat exchanger portion (90) is located entirely within the passenger compartment (84). Advantageously, any connection between an inlet of the fluid supply conduit portion (91) and the remainder of the system, and any connection between an outlet of the fluid delivery conduit (92) and the remainder of the system, is also located outside of the passenger compartment and for example in the engine compartment, and can be located at a position where a leak might be less detrimental. The integral system in accordance with the invention is thus likely to reduce the total number of joints in the system and/or to eliminate the joints present in the passenger compartment which might result in the leaking of coolant onto a passenger.

In familiar manner, the heat exchanger portion (90) is located within a housing (86), for example behind or comprising a part of a vehicle dashboard. Apertures (87) provide for the circulation of air from the vehicle passenger compartment (84) over the heat exchanger portion (90). Heat is transferred from the engine coolant into the circulating air, and thereby heats the space (84). A pump (88) is provided to encourage the circulation of air across the heat exchanger portion (90) and into the cab. Baffles (not shown) may be provided to selectively close apertures (87) to control the quantity and/or direction of heated air flow as desired in familiar manner.

Thus, the embodiment in Figure 5 illustrates the incorporation of a heat transfer means in accordance with an embodiment of the invention into a vehicle as a vehicle cab heater which functions in essentially conventional manner, but which exploits the advantages of the integral heat transfer means of the invention to reduce the number of joints, in particular within the cab area, for example to address the problem of leakage.

The embodiment of Figure 5 makes use of surplus heat from the engine which might otherwise be wasted. Thus, it embodies the principles of the cooling line illustrated generally schematically in Figure 3, but positions the heat exchanger (90) in such a way that heat extracted from the coolant is transferred for a useful purpose, rather than merely transferred to ambient.

## Claims

1. A thermal transfer means (40, 41, 42) comprising, fluidly in series:
a fluid supply conduit (41) having a fluid inlet (54) adapted for connection to receive fluid from an outlet of a heat source (14);
a heat exchanger (40) comprising a heat exchanger tube (47) having at least one heat exchanger element disposed thereon; and
a fluid delivery conduit (42) having a fluid outlet (52) adapted for connection to deliver fluid to an inlet of a heat source (14);
wherein, the fluid supply conduit (41), heat exchanger tube (47) and fluid delivery conduit (42) are integrally formed from a common tube formation (40, 41, 42) fabricated from a single material; and wherein the heat exchanger element disposed on the heat exchanger tube (47) is formed from wire in the form of a continuous helix defining individual loops (44), which is itself helically wound around the exterior of the heat exchanger tube (47) and **characterised in that** the heat exchanger tube comprises grooved formations (43) along its length disposed on the exterior of the heat exchanger tube (47) and corresponding with the individual loops (44) of wire helically wound around the tube (47) forming the heat exchanger (40).

2. A thermal transfer means (40, 41, 42) according to claim 1 wherein a fluid inlet (54) of the integral thermal transfer means is adapted to connect directly to an outlet of the heat source (14) and a fluid outlet (52) of the integral thermal transfer means is adapted to connect directly to an inlet of the heat source (14).

3. A thermal transfer means (40, 41, 42) according to claim 1 or claim 2 wherein individual loops (44) of the heat exchanger element are in thermal conductive contact with the exterior of the heat exchanger tube (47) and secured thereon by a joining process selected from: soldering, brazing, mechanical means such as using a binding wire and/or suitable adhesive.

4. A thermal transfer means (40, 41, 42) according to any preceding claim wherein the heat exchanger tube (47) further comprises projections (45) disposed on the interior surface of the tube (47) corresponding to the grooves (43) on the exterior of the heat exchanger tube (47).

5. A thermal transfer means (40, 41, 42) according to any preceding claim wherein the heat exchanger tube (47) on which the heat exchanger element is arranged forms a minor portion of the length of the integral tube formation.

6. A thermal transfer system (40, 41, 42) comprising a thermal transfer means according to any preceding claim and at least a heat source (14) and a fluid reservoir (12) fluidly connected in a continuous circuit for the recirculation of fluid in the system.

7. A thermal transfer system (40, 41, 42) according to claim 6 comprising a cooling system for a vehicle system such as an automotive vehicle system which requires a means of cooling a fluid, wherein the said vehicle system comprises the heat source, and at least the said heat source is fluidly connected in a continuous circuit for the recirculation of a cooling fluid in the system.

8. A thermal transfer system (40, 41, 42) according to claim 6 comprising a space heater and at least a heat source fluidly connected in continuous circuit therewith for the recirculation of a heat transfer fluid in the system, wherein at least the heat exchanger of the integral thermal transfer means is located in or otherwise fluidly connected with the space to be heated.

9. A vehicle incorporating a system in accordance with one of claims 6 to 8.

10. A method of installing a thermal transfer means (40, 41, 42) according to one of claims 1 to 5 into a heat transfer system, the method comprising the steps of:
a. connecting the fluid inlet (54) of the fluid supply conduit to a fluid outlet of a heat source; and
b. connecting the fluid outlet (52) of the fluid delivery conduit to a fluid inlet of a heat source and for example to a fluid inlet of a reservoir thereof.

## Patentansprüche

1. Wärmeübertragungseinrichtung (40, 41, 42), die bezogen auf ein Fluid in Reihe Folgendes aufweist:
eine Fluidzufuhrleitung (41) mit einem Fluideinlass (54), der zur Verbindung angepasst ist, um Fluid von einem Auslass einer Wärmequelle (14) aufzunehmen;
einen Wärmetauscher (40), der einen Wärmetauscherkanal (47) aufweist, der zumindest ein Wärmetauscherelement hat, das daran angeordnet ist; und
eine Fluidabgabeleitung (42) mit einem Fluidauslass (52), der zur Verbindung angepasst ist, um Fluid zu einem Einlass einer Wärmequelle (14) abzugeben;
wobei die Fluidzufuhrleitung (41), der Wärmetauscherkanal (47) und die Fluidabgabeleitung (42) einstückig aus einem gemeinsamen Kanalgebilde (40, 41, 42) ausgebildet sind, das aus einem einzelnen Material hergestellt ist; und wobei
das Wärmetauscherelement, das an dem Wärmetauscherkanal (47) angeordnet ist, aus einem Draht in der Form einer kontinuierlichen Spirale ausgebildet ist, die individuelle Schleifen (44) definiert, der selbst spiralförmig um die Außenseite des Wärmetauscherkanals (47) gewickelt ist, und **dadurch gekennzeichnet ist, dass** der Wärmetauscherkanal vertiefte Gebilde (43) entlang seiner Länge aufweist, die an der Außenseite des Wärmetauscherkanals (47) angeordnet sind und zu den individuellen Schleifen (44) aus Draht korrespondieren, der schraubenförmig um den Kanal (47) gewickelt ist, der den Wärmetauscher (40) ausbildet.

2. Wärmeübertragungseinrichtung (40, 41, 42) nach Anspruch 1, wobei ein Fluideinlass (54) der einstückigen Wärmeübertragungseinrichtung angepasst ist, um direkt mit einem Auslass der Wärmequelle (14) verbunden zu sein, und ein Fluidauslass (52) der einstückigen Wärmeübertragungseinrichtung angepasst ist, um direkt mit einem Einlass der Wärmequelle (14) verbunden zu sein.

3. Wärmeübertragungseinrichtung (40, 41, 42) nach Anspruch 1 oder Anspruch 2, wobei die individuellen Schleifen (44) des Wärmeübertragungselements in wärmeleitfähigen Kontakt mit der Außenseite des Wärmetauscherkanals (47) stehen und durch einen Fügeprozess, der aus Weichlöten, Hartlöten, einem mechanischen Mittel wie zum Beispiel einem Bindedraht und/oder einem geeigneten Klebemittel ausgewählt wird, daran befestigt werden.

4. Wärmeübertragungseinrichtung (40, 41, 42) nach einem vorangegangenen Anspruch, wobei der Wärmetauscherkanal (47) des Weiteren Vorsprünge (45) aufweist, die an der Innenfläche des Kanals (47) korrespondierend zu den Vertiefungen (43) an der Außenseite des Wärmetauscherkanals (47) angeordnet sind.

5. Wärmeübertragungseinrichtung (40, 41, 42) nach einem vorangegangenen Anspruch, wobei der Wärmetauscherkanal (47), an dem das Wärmetauscherelement angeordnet ist, einen Nebenabschnitt der Länge des einstückigen Kanalgebildes ausbildet.

6. Wärmeübertragungssystem (40, 41, 42) mit einer Wärmeübertragungseinrichtung nach einem vorangegangenen Anspruch und zumindest einer Wärmequelle (14) und einem Fluidreservoir (12), das in einem kontinuierlichen Kreislauf für die Rezirkulation eines Fluids in dem System fluidverbunden ist.

7. Wärmeübertragungssystem (40, 41, 42) nach Anspruch 6, das ein Kühlsystem für ein Fahrzeugsystem wie zum Beispiel ein Automobilfahrzeugsystem aufweist, das eine Einrichtung zum Kühlen eines Fluids erfordert, wobei das Fahrzeugsystem die Wärmequelle aufweist und zumindest die Wärmequelle in einem kontinuierlichen Kreislauf für die Rezirkulation eines Kühlfluids in dem System fluidverbunden ist.

8. Wärmeübertragungssystem (40, 41, 42) nach Anspruch 6, das eine Raumheizeinrichtung und zumindest eine Wärmequelle aufweist, die in einem kontinuierlichen Kreislauf damit für die Rezirkulation eines Wärmeübertragungsfluids in dem System fluidverbunden ist, wobei zumindest der Wärmetauscher der einstückigen Wärmeübertragungseinrichtung in dem zu heizenden Raum angeordnet ist oder anders mit dem zu heizenden Raum fluidverbunden ist.

9. Fahrzeug umfassend ein System nach einem der Ansprüche 6 bis 8.

10. Verfahren zum Einbauen einer Wärmeübertragungseinrichtung (40, 41, 42) nach einem der Ansprüche 1 bis 5 in ein Wärmeübertragungssystem, wobei das Verfahren die folgenden Schritte aufweist:
a. Verbinden des Fluideinlasses (54) der Fluidzufuhrleitung mit einem Fluidauslass einer Wärmequelle; und
b. Verbinden des Fluidauslasses (52) der Fluidabgabeleitung mit einem Fluideinlass einer Wärmequelle und zum Beispiel mit einem Fluideinlass eines Reservoirs davon.

## Revendications

1. Moyens de transfert thermique (40, 41, 42) comprenant, de façon fluide et en série :
un conduit d'amenée de fluide (41) ayant une entrée de fluide (54) adaptée pour être connectée pour recevoir le fluide d'une sortie d'une source de chaleur (14) ;
un échangeur thermique (40) comprenant un tube d'échangeur thermique (47) ayant au moins un élément d'échangeur thermique disposés par-dessus ; et
un conduit de décharge de fluide (42) ayant une sortie de fluide (52) adaptée pour être connectée pour décharger le fluide vers une entrée d'une source de chaleur (14) ;
dans lesquels le conduit d'amenée de fluide (41), le tube d'échangeur thermique (47) et le conduit de décharge de fluide (42) sont intégralement formés à partir d'une formation commune de tube (40, 41, 42) fabriqué à partir d'un matériau unique ; et dans lesquels
l'élément d'échangeur thermique disposé sur le tube d'échangeur thermique (47) est formé d'un fil sous forme d'hélice continue définissant des boucles individuelles (44) et qui est lui-même entouré en hélice autour de l'extérieur du tube d'échangeur thermique (47) et **caractérisés en ce que** le tube d'échangeur thermique comprend des formations rainurées (43) le long de sa longueur disposées sur l'extérieur du tube d'échangeur thermique (47) et correspondant aux boucles individuelles (44) du fil entouré en hélice autour du tube (47) formant l'échangeur thermique (40).

2. Moyens de transfert thermique (40, 41, 42) selon la revendication 1 dans lesquels une entrée de fluide (54) des moyens de transfert thermique intégraux est adaptée pour se connecter directement à une sortie de la source de chaleur (14) et une sortie de fluide (52) des moyens de transfert thermique intégraux est adaptée pour se connecter directement à une entrée de la source de chaleur (14).

3. Moyens de transfert thermique (40, 41, 42) selon la revendication 1 ou la revendication 2 dans lesquels des boucles individuelles (44) de l'élément d'échangeur thermique sont en contact conductif thermique avec l'extérieur du tube d'échangeur thermique (47) et fixés par-dessus au moyen d'un procédé de jointoiement choisi dans les procédés suivants : soudure, brasure, moyens mécaniques tels que l'utilisation d'un fil de liaison et/ou d'un adhésif approprié.

4. Moyens de transfert thermique (40, 41, 42) selon l'une des revendications précédentes dans lesquels le tube d'échangeur thermique (47) comprend en outre des projections (45) disposées sur la surface intérieure du tube (47) correspondant aux rainures (43) à l'extérieur du tube d'échangeur thermique (47).

5. Moyens de transfert thermique (40, 41, 42) selon l'une des revendications précédentes dans lesquels le tube d'échangeur thermique (47) sur lequel l'élément d'échangeur thermique est disposé forme une portion mineure de la longueur de la formation intégrale de tube.

6. Système de transfert thermique (40, 41, 42) comprenant des moyens de transfert thermique selon l'une des revendications précédentes et au moins une source de chaleur (14) et un réservoir de fluide (12) connectés de façon fluide dans un circuit continu pour la recirculation du fluide dans le système.

7. Système de transfert thermique (40, 41, 42) selon la revendication 6 comprenant un système de refroidissement pour un système de véhicule tel qu'un système de véhicule automobile qui nécessite les moyens de refroidir un fluide, dans lequel ledit système de véhicule comprend la source de chaleur, et au moins ladite source de chaleur est connectée de façon fluide dans un circuit continu pour la recirculation d'un fluide de refroidissement dans le système.

8. Système de transfert thermique (40,41,42) selon la revendication 6 comprenant un appareil de chauffage et au moins une source de chaleur connectée à celui-ci de façon fluide dans un circuit continu pour la recirculation d'un fluide de transfert thermique dans le système, dans lequel au moins l'échangeur thermique des moyens de transfert thermique intégraux est situé dans l'espace à chauffer ou autrement connecté de façon fluide à celui-ci.

9. Véhicule incluant un système selon l'une des revendications 6 à 8.

10. Méthode d'installation de moyens de transfert thermique (40,41,42) selon l'une des revendications 1 à 5 dans un système de transfert thermique, la méthode comprenant les étapes suivantes :
a. connecter l'entrée de fluide (54) du conduit d'amenée de fluide à une sortie de fluide d'une source de chaleur ; et
b. connecter la sortie de fluide (52) du conduit de décharge de fluide à une entrée de fluide d'une source de chaleur et par exemple à une entrée de fluide d'un réservoir de celle-ci.
